# EUROPEAN PATENT APPLICATION

(11) **EP 2 926 657 A1**
(43) Date of publication of application: **07.10.2015**
(21) Application number: 13810670.3
(22) Date of filing: 27.06.2013
(51) Int. Cl.: A01N 1/02

(54) **DEVICE FOR THE PERFUSION OF A LIVER GRAFT**

(30) Priority: 29.06.2012 ES 201231023
(71) Applicant: Grifols, S.A., 08022 Barcelona (ES); Hospital Clinic i Provincial de Barcelona, 08022 Barcelona (ES)
(72) Inventor: MANZANO RIERA, Jorge Maria, E-08009 Barcelona (ES); MENENDEZ CORTINA, Jorge, E-08041 Barcelona (ES); FONDEVILA CAMPO, Constantino, E-08036 Barcelona (ES); GARCIA-VALDECASAS SALGADO, Juan Carlos, E-08036 Barcelona (ES)
(74) Representative: Durán-Corretjer, S.L.P.
(86) International application number: PCT/ES2013/070430
(87) International publication number: WO 2014/001592

(57) **Abstract**

The invention relates to a device for the perfusion of a human liver graft, which includes: (a) an upper tray which includes a container suitable for holding a liver graft in an inverted position with respect to the normal anatomical position, in contact with a preservative solution, an arterial perfusion circuit, and a portal perfusion circuit, separate from said arterial perfusion circuit; and (b) a lower console, which supports said tray and which includes a means for sending or supplying said preservative solution, a means for supplying power, a means for temperature control, a means for supplying oxygen, a means for controlling the flow rate and pressure, said tray and console being connected in a secure, removable manner, wherein said means for temperature control maintain the temperature of the liver graft between 0 ºC and 40 ºC.

## Description

This invention refers to a device for the hepatic perfusion suitable to maintain a liver or a hepatic graft in extracorporeal preservation, in a viable operating state to permit its further transplantation. Besides, the present invention refers as well to the use of said hepatic perfusion device to evaluate the quality of a hepatic graft to be transplanted.

The hepatic transplantation is nowadays the treatment of choice and the unique valid therapy for patients with liver failure which cannot be handled by means of any other therapeutic measure. However a high number of patients affected with liver failure die in the end stage while remaining in the waiting lists before receiving a suitable liver for the transplantation. Also approximately 25% of the hepatic transplantations may show early dysfunctions this being one of the main reasons of morbidity after the transplantation using hypothermic preservation or cold ischemia of the liver.

Generally the preservation of organs from the donors is carried out by means hypothermic storage (below 20ºC and usually approximately at 4ºC) maintaining the organ in a state of reduced metabolism for several hours. It has been demonstrated that during this period of ischemia in which the blood supplied to the organ is not sufficient, cell damage and deterioration of the quality of the organ to be transplanted occurs.

An alternative to this form of preservation of said organ consists in carrying out an hepatic perfusion (ex-vivo) which permits to maintain the liver in operating conditions simulating the physiological conditions outside of the human body, generally in normothermic conditions approximately at 37ºC. However in the particular case of the liver this type of preservation entails some technical difficulties which have given ground to the fact that its application has not been established as a usual praxis within the clinical field.

Multiple devices have been disclosed for the hepatic preservation in normothermic conditions. For instance document EP 1017274 discloses a device for preserving a liver in which the containment means for the organ comprise a plastic bag defining an obturated portion and a preservation chamber. With this type of device different types of flow towards the hepatic artery and portal vein may not be obtained as it consists in a sole circuit branching out just before the entry into said hepatic artery and portal vein respectively. Therefore with this kind of device it is not possible to convey the flow towards the hepatic artery with a high pressure and pulsating flow, and simultaneously to convey the fluid towards the portal vein with a low pressure and continuous flow.

The liver is, among the human organs suitable for transplantation, the one with the largest volume and in contrast to the heart or the kidney, it has a soft consistency with the possibility of easily tearing out. For this reason it is highly possible that when laying on a relatively hard surface ischemia by squeezing may occur, interrupting the entry of oxygen, co-factors and nutrients to the hepatic cells, which provokes a cascade of reactions at cellular level which are responsible for irreversible tissue damage which may negatively affect the quality of the organ to be transplanted.

The present invention discloses a device for hepatic perfusion overcoming the drawbacks of the prior art. For instance the hepatic graft to be transplanted is located in the preservation device in an inverted position in relation to the anatomic normal position being said graft located within a preservation solution, so that the hepatic graft is submerged within said solution but in a position of practical flotation in said preservation solution, slightly resting on a porous and soft surface which permits to substantially reduce the risk of tissue damages and increasing therefore the quality of the organ to be transplanted.

The device of the present invention contributes multiple improvements in respect to the device disclosed in document ES 2328660 B1. For example, the hepatic perfusion device of the present invention has elements not permitting the rotation of the hepatic graft within the preservation device during the time in which said preservation is carried out, preventing in this way the blocking of the inlet conducts or its disconnection from the cannulae.

Another advantage of the hepatic perfusion device of the invention is that it has a tray in its upper portion which may be independently sterilised, in which tray preferably all components are of disposable nature. Said tray may be located, for instance, in the upper part of a console which comprises the rest of components of the device such as for example the means for conveying or supplying said preservation solution to the hepatic artery and to the portal vein, means for the supply of energy, means for the control of the temperature, means for the supply of oxygen, means for the control of flow, means for the control of pressure. This arrangement, apart from making the device more compact, facilitates its use as it will be no longer necessary to arrange the device for hepatic perfusion within the operating room.

Besides, unlike the hepatic perfusion devices of the prior art, in the device of the present invention the means for the control of the temperature are configured to maintain the temperature of the hepatic graft between 4ºC and 40ºC. This permits to carry out the hepatic perfusion under normal thermic conditions (approximately at 37ºC) or under hypothermia conditions in case that these conditions are necessary.

The hepatic perfusion device of the present invention has two separate circuits: a circuit for arterial perfusion and a circuit for portal perfusion, configured for the perfusion of said preservation solution through the hepatic artery and the portal vein respectively. For being independent, said circuits can simulate the physiological conditions of the liver within the human body, that is, it is possible to send the preservation solution with a pulsating high pressure flow to the hepatic artery and with a continuous flow at a low pressure towards the portal vein.

In addition, the hepatic perfusion device of this invention has the advantage that it is possible to remove by gravity the preservation solution after perfused, with the possibility of collecting same, for instance, by means of a bag. In this way, it is possible in an easy way, to add fresh preservation solution at different periods of time or continuously.

The hepatic perfusion device of this invention has a container in which the hepatic bile produced by the hepatic graft during the perfusion may be collected, so preventing its mixing with the perfusion/preservation solution. Also, said bile production may indicate the quality and/or the preservation situation of the hepatic graft.

Accordingly, the device of the present invention may be used as well to evaluate the operative situation of the hepatic graft, achieving a more complete evaluation of the organ to be transplanted and, therefore, reducing the risk of failure of said hepatic graft. This is an aspect of the perfusion device which has a high potential in order to have an important influence in the clinical practice, by its capacity to predict the liver operating conditions. In the prior art, different combinations of biochemical, hemodynamical and other functional parameters measured during the hepatic perfusion have been used in order to monitorize the performance after perfusion (Guarrera J. V., Am j Transplant 2010; Vejemans K, Transplant Proc. 2009). Particularly, the hepatic perfusion device in normothermic conditions permits the liver to remain metabolically active and, eventually, offers the best opportunity to evaluate various viability measures before in vivo perfusion (Schon M.R. Ann. Surg. 2001; Brockmann J., Ann. Surg. 2009; Fondevilla C., Ann Surg. 2011). According to a recent report, the levels of 25 hepatic metabolites produced during normathermic hepatic perfusion were used to distinguish normal rat livers from those with ischemic damages (Perk S., PloSOne 2011). Therefore, said prior art metabolites may be used in the hepatic perfusion device of the present invention to predict in a very accurate form whether the human hepatic graft should be used or not.

Therefore, the present invention discloses a device for the perfusion of a human hepatic graft in extracorporeal form maintaining the graft in viable operating situation, characterised in that it comprises:
(a) An upper tray comprising:
   - A container adequate to receive an hepatic graft in a position which is inverted in respect to the normal anatomic position, being said hepatic graft in contact with a preservation solution, with the arrangement within said container of a molded part defining a housing which form is adapted to that of a human liver, a flexible and porous plate being arranged inside said container in a position which is parallel to the bottom or lower part of the container, said plate being located a few centimetres separated from the bottom and with the addition of a cannula in the top part of said container aimed at carrying out the cannulation of the portal vein;
   - An arterial perfusion circuit, configured for the perfusion of said preservation solution through the hepatic artery at a pressure and with a flow type which are similar to those of the physiologic system, having said arterial perfusion circuit elements to convey said perfusion solution towards the hepatic graft, filtration elements, elements for heat exchange, elements for oxygenation, elements for flow control, elements for the control of pressure, of said perfusion solution;
   - A portal perfusion circuit, separate from said arterial perfusion circuit, configured for the perfusion of said preservation solution through the portal vein at a pressure and flow type similar to those of the physiologic system, said portal profusion circuit comprising elements for the conveyance of said perfusion solution towards the hepatic graft, filtration elements, elements for heat exchange, elements for oxygenation, elements for the flow control, elements for the control of pressure, of said perfusion solution;
(b) A bottom console, in which said upper tray is supported, comprising:
   - Means for conveying or supplying said preservation solution to the hepatic artery and to the portal vein, means for the supply of energy, means for the control of temperature, means for the supply of oxygen, means for the control of flow and means for the control of pressure wherein the upper tray and the bottom console are secured in a fixed and detachable way and in which said means for the control of the temperature are configured to maintain the temperature of said hepatic graft between 0ºC and 40ºC.

Preferably, the upper tray of the device according to this invention may be sterilized and more preferably, all of the components of said upper tray are of disposable nature. In addition, the device in the upper part of the container, which is aimed at carrying out the cannulation of the portal vein by means of a fixed cannula is, preferably, made out of a stiff material.

As mentioned above, the device for the perfusion of an hepatic graft according to the present invention has as well means for removing said preservation solution after its perfusion using gravity and means to collect said preservation solution after perfusion. It has, as well, means for feeding fresh preservation solution. Also, the device has a draining of circuit.

Another objective of the present invention is to disclose the use of the hepatic perfusion device of the invention for the evaluation of the quality of the hepatic graft to be transplanted.

For a better understanding of the invention, some explanatory but not limiting drawings of an embodying of this invention are attached in which:
Figure 1 is a perspective view of an embodiment of the hepatic perfusion device of the present invention.
Figure 2 is an exploded perspective view of an embodiment of the hepatic perfusion device of the present invention.

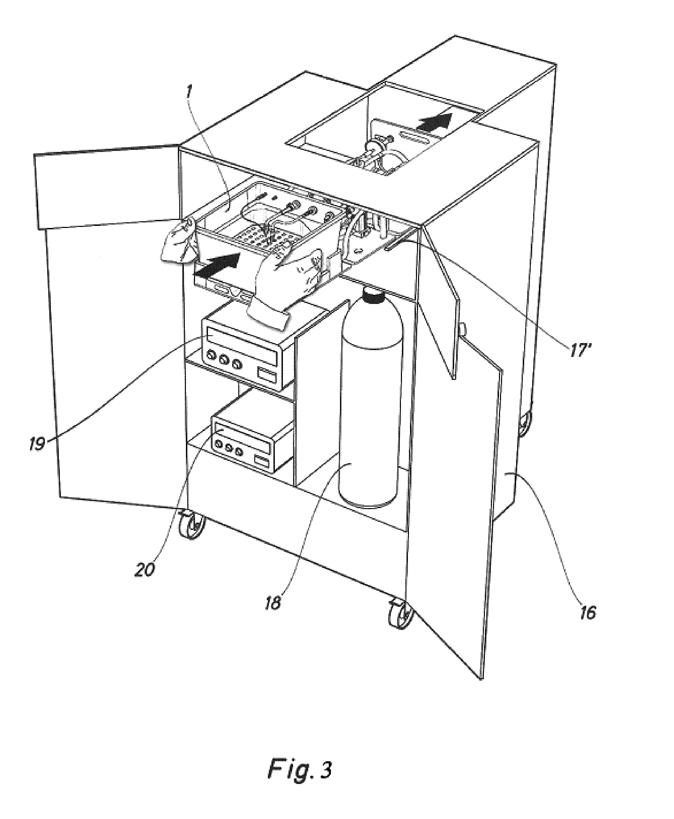

Figure 3 is a perspective view of the hepatic perfusion device of the present invention.
Figure 4 is a perspective view of the upper tray of the hepatic perfusion device of the present invention.
Figure 5 shows as well a perspective view from a different angle of the upper tray of the hepatic perfusion device of the present invention.
Figure 6 is a top view of the upper tray of the hepatic perfusion device of the present invention.
Figure 7 is a perspective view of the bottom console of the hepatic perfusion device of the present invention.
Figure 8 is a front view of the bottom console of the hepatic perfusion device of the present invention.
Figure 9 is a perspective view of the hepatic perfusion device of the present invention after final assembly.

The hepatic profusion device of this invention has a tray in its upper part and a console in the bottom part supporting said upper tray. This arrangement allows to separate a "clean" area from a non clean or "dirty" area. Preferably the upper tray can be prepared in a sterile form and more preferably all of its components are of a disposable nature.

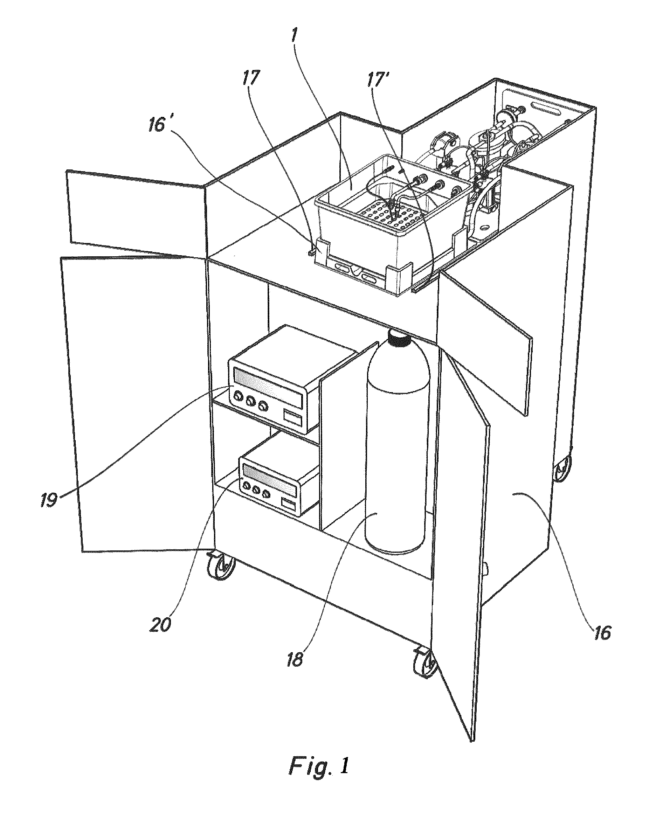

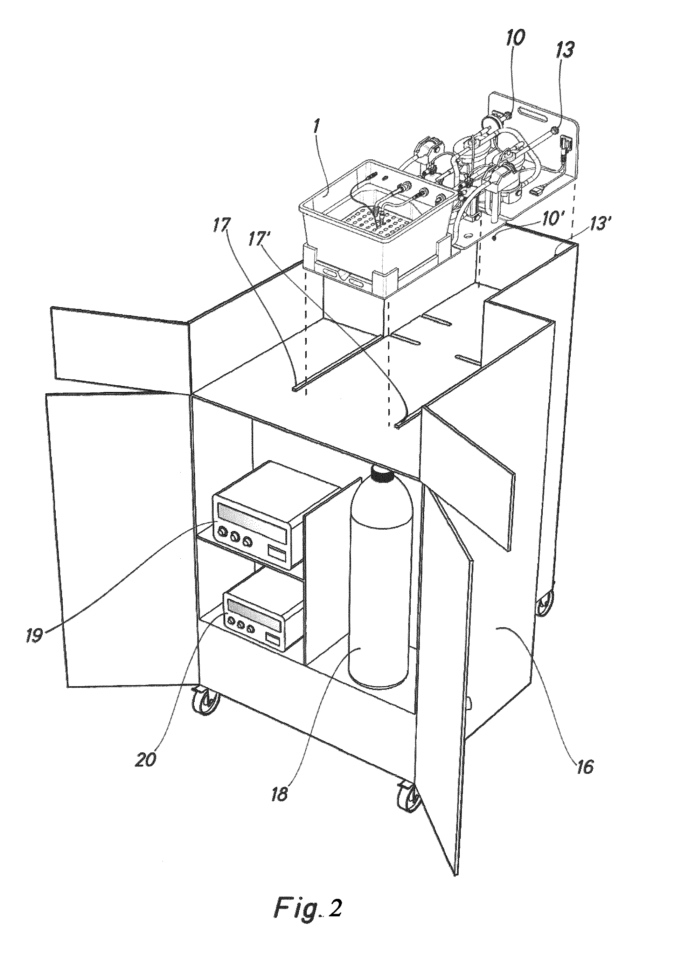

Figures 1 and 2 show an embodiment of the hepatic perfusion device of the present invention. The upper tray -16'- and the bottom console -16- are secured together in a fixed and detachable form. The bottom console has in its upper part some guides -17,17'- suitable to permit the upper tray to slide on them. The form in which the upper tray -16'- can slide on guides -17,17'- is to be observed in the figure -3-. The upper tray abuts against the quick action connections -10', 12', 13'-, which coincide with ducts -10, 12, 13- of the upper tray -16'-. Said guides -17, 17'- and connections -10', 12', 13'- contribute to secure the upper tray to the bottom console.

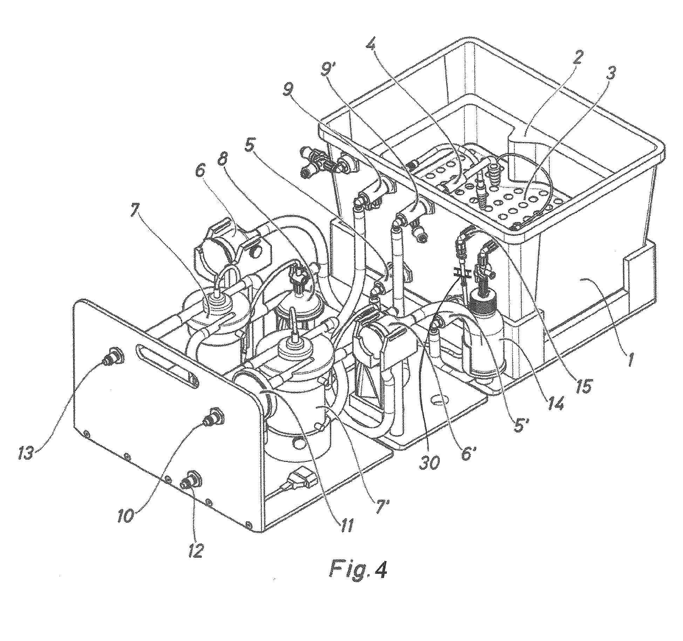

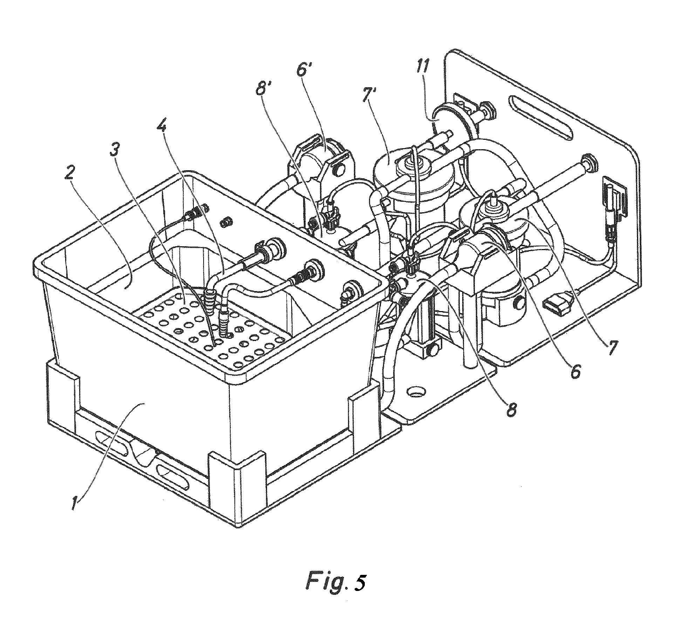

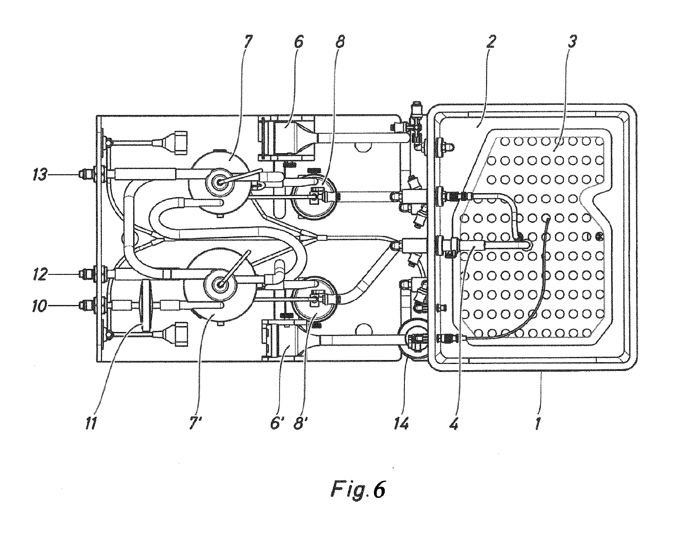

On the other side, an embodiment of the upper tray -16'-of the hepatic perfusion device of the present invention is shown in figures 4-6. Said tray has a container -1-which will receive the hepatic graft to be preserved. Inside of said container -1- a molded part -2- is arranged to define a housing which form is adapted to the form of a human liver. The form of said molded part -2- may be observed in figure 6. Said molded part -2- assists in stopping the eventual rotation movement of the hepatic graft, which reduces the risk that the cannulations made on the hepatic graft may separate during the preservation procedure. In addition said container -1- has a connector -4- aimed at carrying out the cannulation of the portal vein by means of a fixed cannula, preferably a rigid cannula, which helps to maintain the hepatic graft in a "floating" condition.

The container -1- is adequate to contain a preservation solution which has the needed characteristics to maintain the hepatic graft in viable operating conditions to permit its transplantation. In the hepatic perfusion device of this invention the hepatic graft is located within the container -1-, advantageously in an inverted position in respect to the anatomic normal position. This means that the lower hepatic surface which has vascular structures of the hepatic hilum is located in the upper part, while the front surface rests supported on a porous and flexible plate -3- inside of said container -1-. This position has the advantage to facilitate the cannulation of said hepatic graft. The porous flexible plate -3- may be located with a separation of several centimetres of the bottom part of container -1- in a form which is parallel to said bottom, so that the hepatic graft will be partially submerged inside the preservation solution and it will slightly rest on said porous and flexible plate -3-. This arrangement of the hepatic graft in the hepatic perfusion device of the present invention substantially reduces the risk of tissue damages to the organ to be transplanted.

The hepatic perfusion device of the present invention has an arterial perfusion circuit permitting the perfusion of the preservation solution along the hepatic artery. Said arterial perfusion circuit is suitable to simulate the same type of flow and pressure than in the living organ, that is a high pressure and a pulsating flow. Preferably the perfusion solution is the same that the preservation solution contained in container -1-. Said arterial perfusion circuit has elements for the conveyance of the preservation solution to the hepatic artery, elements for the control of the pressure and flow, elements for heat exchange and elements to oxygenate the preservation solution. The preservation/perfusion solution leaves container -1- along a conduct -5- on the bottom part of said container -1- and said preservation/perfusion solution is conveyed by means of a pump -6- to a heat and oxygen exchanger -7-, said preservation/perfusion solution passing subsequently through a filter -8- before returning to container -1- through a duct -9- located in the upper part of said container -1-.

The oxygen used to oxygenate the preservation/perfusion solution may be stored in a suitable container located in the bottom console of the hepatic perfusion device of the present invention. Said oxygen enters the upper tray through a duct -10- and subsequently passes through a filter -11- and afterwards passes through the heat and oxygen exchangers -7',7- and finally escapes to the atmosphere. In this way the quality of the air is advantageously improved, for instance, within an operation room.

On the other side, the means to control the temperature in the hepatic perfusion device of the invention permit to maintain the hepatic graft to a temperature comprised between 0ºC and 40ºC. The heat exchange fluid comes into the upper tray through the duct -12-, and subsequently passes through the heat and oxygen exchangers -7',7- and finally exits the upper tray through duct -13- to be conveyed to the means controlling temperature, located in the bottom console of the device. Similarly to the arterial perfusion circuit, the hepatic perfusion device of the present invention has a circuit for portal vein perfusion which permits the perfusion of the perfusion/preservation solution through the portal vein. Said portal perfusion circuit unlike to the arterial perfusion circuit, is suitable to convey the preservation solution to a low pressure and with continuous flow towards the portal vein of the hepatic graft. Said portal perfusion circuit has elements for the conveyance of the preservation solution to the portal vein, elements for the control of the pressure and flow, elements for the heat exchange and elements to oxygenate the preservation solution. The preservation perfusion solution leaves the container -1- by conduct -5'- in the bottom part of said container -1- and said preservation/perfusion solution is conveyed by means of a pump -6'- towards a heat and oxygen exchanger -7'- and subsequently said preservation/perfusion solution passes through the filter -8'- before returning to the container -1- through the conduct -9'- located on the upper part of said container -1-.

Moreover, the upper tray comprises a container -14- to collect the bile production from the hepatic graft during the perfusion of the same so as not to allow the mixing of the same with the perfusion/ preservation solution. The upper tray has as well a duct by means of which the preservation solution may be removed after its perfusion so that it may be collected afterwards, for instance, within a bag. In this way it is possible, in a simple manner, to add fresh preservation solution at different time intervals or to make such addition continuously.

Also, the upper tray comprises a draining circuit permitting the automatic draining of each of the components of said upper tray. The preservation solution drained out is returned to container -1- through the connection -15-. The draining of the upper tray may be terminated, for instance, by closing the clamp cock -30-.

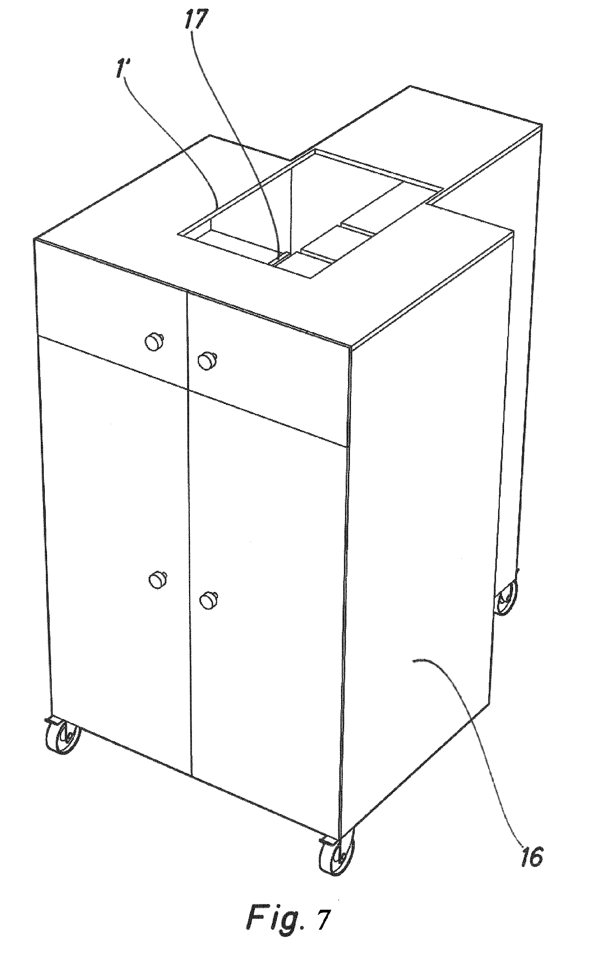

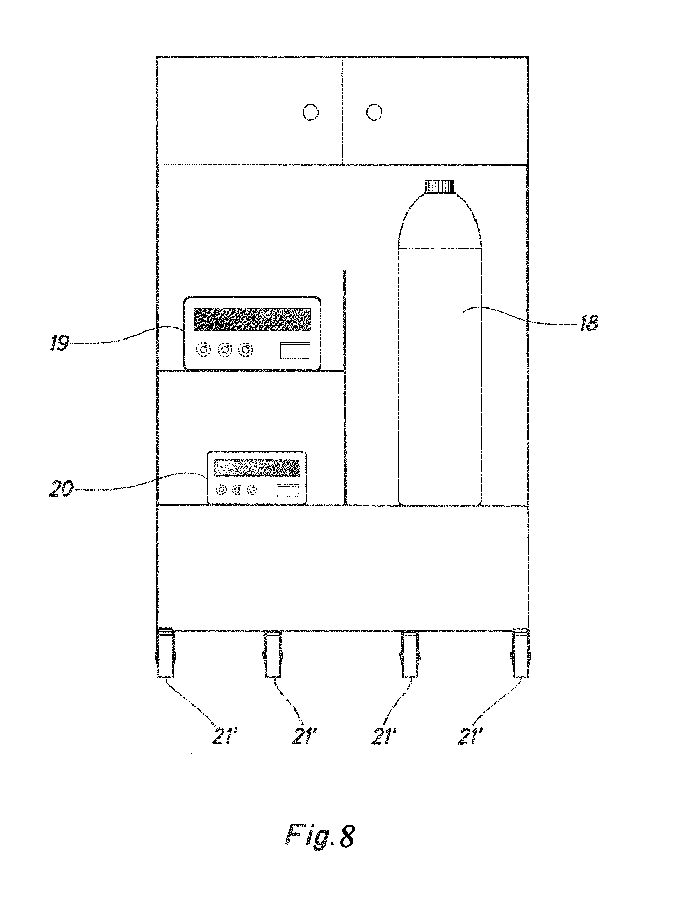

One embodiment of the bottom console -16- of the hepatic perfusion device of the present invention is shown in figure 7 and 8. As above mentioned, the upper tray and the bottom console are secured in a fixed and detachable manner. The bottom console has in its upper part guides -17, 17'- appropriate to let the upper tray to slide on them. The upper tray abuts against quick connections -10', 12', 13'- which coincide with ducts -10, 12, 13- of the upper tray. Said guides -17, 17'- and connections -10', 12', 13'- assist in securing the upper tray to the bottom console.

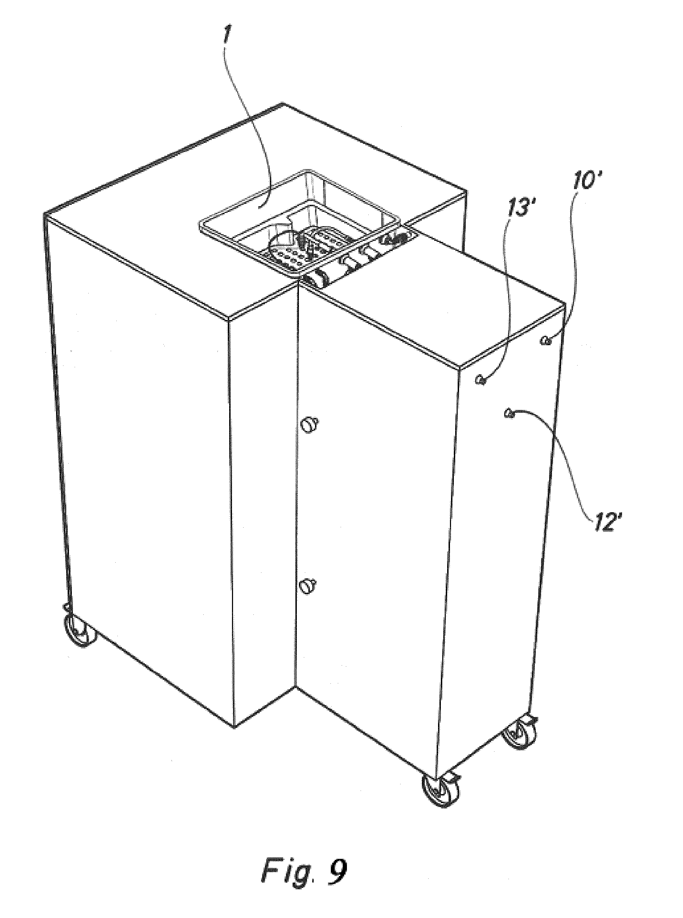

Figure 8 shows the means -18- for supplying oxygen, the means for the conveyance or feeding of said preservation solution to the hepatic artery and to the portal vein as well as the means for the control of flow and pressure -19- and the means for the temperature control -20- all included within the bottom console of the device of the present invention. At the same time, the bottom console can comprise wheels -21- which assist the mobility of the hepatic perfusion device, for instance within the operating room. Figure 9 shows an embodiment of the hepatic perfusion device of the present invention after the assembly of the upper tray on the bottom console.

It is to be observed as advantageous that only the container -1- of the upper tray is exposed to the outside. Once in operation the container -1- of the upper tray may have a cover assisting to prevent contamination of the hepatic graft to be preserved.

While the invention has been described in respect to preferred embodiments, these should not be considered as limiting the present invention which will be defined by the broader interpretation of the following claims.

## Claims

1. Device for the perfusion of a human hepatic graft in extra corporeal form, maintaining the graft in a viable operating state, **characterised in that** it comprises:
a) a tray in the upper part comprising:
- a container adequate to receive an hepatic graft in a position inverted in relation to the anatomic normal position, said hepatic graft being in contact with a preservation solution, being located inside of said container a moulded part defining a housing which form is adapted to that of a human liver, being arranged inside of said container in a parallel disposition to the bottom or the lower part of said container a porous flexible plate located several centimetres separated from said bottom and a cannula arranged on the upper part of said container aimed at the cannulation of the portal vein;
- an arterial perfusion circuit configured for the perfusion of said preservation solution through the hepatic artery at a pressure and flow type similar to those of the physiologic system, having said arterial perfusion circuit elements for the conveyance of said perfusion solution towards the hepatic graft, filtration elements, heat exchange elements, oxygenation elements, flow control elements, pressure control elements of said perfusion solution;
- a portal perfusion circuit, separated from the arterial perfusion circuit, configured for the perfusion of said preservation solution through the portal vein at a pressure and flow type similar to those of the physiologic system, said portal perfusion circuit comprising elements for the conveyance of said perfusion solution towards the hepatic graft, filtration elements, elements for heat exchange, elements for oxygenation, elements for flow control, elements for pressure control of said perfusion solution and
b) a bottom console on which said upper tray is supported comprising:
- means for the conveyance or feeding of said preservation solution to the hepatic artery and to the portal vein, means for the supply of energy, means for the control of temperature, means for the supply of oxygen, means for the control of flow and means for the control of the pressure,
wherein the upper tray and the bottom part console are secured in a fixed and detachable manner and **in that** said means for the control of temperature are configured to maintain the temperature of the hepatic graft between 0ºC and 40ºC.

2. Device for the perfusion of a human hepatic graft, according to claim 1, **characterized in that** said upper tray of the device is sterilizable.

3. Device for the perfusion of a human hepatic graft, according to any of the previous claims **characterized in that** all components of the upper tray are of a disposable nature.

4. Device for the perfusion of a human hepatic graft, according to any of the previous claims, **characterized in that** said cannula in the upper part of the container of the upper tray is made out of a stiff material.

5. Device for the perfusion of a human hepatic graft, according to any of the previous claims, **characterized in that** it comprises additionally means to remove the preservation solution after its perfusion using gravity and means to collect said perfused preservation solution.

6. Device for the perfusion of a human hepatic graft, according to any of the previous claims, **characterized in that** it comprises further means to feed fresh preservation solution.

7. Device for the perfusion of a human hepatic graft, according to any of the previous claims, **characterized in that** the preservation solution is the same than the perfusion solution.

8. Use of a device for the perfusion of an hepatic graft according to claims 1 to 6 for the evaluation of the quality of an hepatic graft to be transplanted.
